# FASCICULE DE BREVET EUROPEEN

(11) **EP 1 382 817 B1**
(45) Date de publication et mention de la délivrance du brevet: **22.03.2006**
(21) Numéro de dépôt: 03291734.6
(22) Date de dépôt: 11.07.2003
(51) Int. Cl.: F02C 6/08, F01D 15/08, F01D 15/10

(54) **Système d'entrainement d'une pompe dans un turbomoteur**
System für den Antrieb einer Pumpe in einer Turbomaschine
Pump driving system in a turbo-engine

(30) Priorité: 17.07.2002 FR 0209028
(43) Date de publication de la demande: 21.01.2004
(73) Titulaire: SNECMA, 75015 Paris (FR)
(72) Inventeur: Bouiller, Philippe, 77210 Samoreau (FR); Franchet, Michel, 77240 Pouilly-le-Fort (FR); Ruis, Jean-Pierre, 77820 Le Chatelet en Brie (FR)
(74) Mandataire: Cardy, Sophie Marie

(56) Documents cités:
- EP-A- 0 694 472
- US-A- 4 503 666
- US-A- 5 285 626
- US-A- 5 577 385
- US-A- 5 899 085
- US-A- 6 145 314

## Description

L'invention concerne la sécurité du fonctionnement des accessoires d'un turbomoteur, notamment d'aviation, entraînés par des moteurs électriques.

Le rapport poussée/poids a toujours constitué l'objectif majeur des motoristes dans l'évoludon des réacteurs militaires. L'augmentation des taux de compression, des températures d'entrée de turbine et l'amélioration du rendement ont constamment réduit la taille des moteurs.

Traditionnellement, la chaîne de prélèvement de la puissance nécessaire pour entraîner les accessoires du réacteur, tels que la pompe à carburant, la pompe de lubrification, et le générateur électrique, comporte un arbre radial entraîné au moyen de renvois d'angle par l'arbre du compresseur et entraînant à son tour les accessoires situés dans un boîtier disposé latéralement sur le moteur. Cette chaîne de prélèvement de puissance et le boîtier d'accessoires n'ont suivi qu'avec difficulté l'évolution des moteurs et représentent une part très importante de la masse totale des moteurs, notamment lorsqu'il s'agit de petits moteurs, surtout lorsque le boîtier supporte un démarreur et un alternateur.

La taille du boîtier d'accessoires augmente la surface frontale du moteur.

Or, l'utilisateur de petits moteurs sur des avions d'entraînement, mais également sur des drones d'observation d'attaque ou des missiles de croisière, oblige les motoristes à privilégier la furtivité de ces moteurs et donc à diminuer leur surface frontale.

La diminution de la masse et de la surface frontale des moteurs peut être réalisée en intégrant un démarreur-générateur dans le réacteur et en entraînant les accessoires par des moteurs électriques alimentés par le générateur tel que décrit dans le document FR 2685735.

Dans ce cas, la chaîne mécanique de prélèvement de puissance et le boîtier d'accessoires peuvent être réduits, voire éliminés.

L'utilisation de moteurs électriques pour entraîner les accessoires, tels que les pompes à carburant, les pompes de lubrification et les pompes hydrauliques, présente l'avantage de faciliter le pilotage de ces accessoires et de permettre de les placer n'importe où dans la cellule ou le pylône de suspension du moteur, dans des endroits qui facilitent leur accessibilité ou leur dépose rapide, tout en réduisant leur vulnérabilité aux tirs éventuels adverses.

La seule interface moteur/accessoires devient alors une transmission électrique. C'est un réseau électrique qui achemine l'énergie du groupe auxiliaire de puissance au démarreur et au moteur électrique entraînant la pompe de carburant pendant la phase de démarrage du réacteur, puis c'est le démarreur-générateur intégré qui fournit l'énergie électrique aux moteurs électriques entraînant les accessoires, notamment à celui entraînant la pompe à carburant, dès que le réacteur peut fonctionner en régime autonome.

Mais malgré la très grande fiabilité des systèmes électriques aujourd'hui, il est toujours possible qu'une panne électrique survienne en vol, soit sur le générateur électrique, soit sur le moteur électrique d'entraînement de la pompe à carburant. C'est alors l'extinction du moteur et la perte possible de l'engin volant ou de l'avion s'il est monomoteur.

Le but de l'invention est de remédier à ce grave problème, en associant au moteur électrique d'entraînement de l'accessoire, un système d'assistance qui puisse assurer seul le fonctionnement de l'accessoire après le démarrage du turbomoteur en cas de défaillance de l'alimentation électrique du moteur électrique ou de défaillance de ce moteur électrique.

L'invention concerne donc un système d'entraînement d'une pompe à carburant ou d'une pompe de lubrification, dans un turbomoteur, ledit système comportant un moteur électrique présentant un stator et un rotor.

Selon l'invention, ce système d'entraînement est caractérisé par le fait qu'il comporte en outre une turbine à air présentant un carter et un ensemble tournant et en ce que ledit rotor et ledit ensemble tournant sont mécaniquement couplés à ladite pompe, ladite turbine à air étant susceptible d'être alimentée par un débit d'air prélevé dans un compresseur dudit turbomoteur afin de permettre une participation à l'entraînement de ladite pompe.

Par intégration, il faut entendre que le stator du moteur électrique est porté par le carter et le rotor est monté sur l'ensemble tournant, coaxialement à l'axe de rotation de la turbine à air, sans la présence de paliers spécifiques au moteur électrique, ce qui rend le système d'entraînement compact et léger.

Selon une autre caractéristique de l'invention, le système d'entraînement comporte en outre une vanne de réglage du débit d'air prélevé au compresseur, qui est en position fermée pendant la phase de démarrage du turbomoteur et en position ouverte après le démarrage.

Cette disposition permet l'alimentation en air de la turbine à air, dans les phases de vol de l'engin qui en est équipé, ce qui permet de décharger au moins en partie le moteur électrique, de réduire par le fait même la taille et la demande d'énergie électrique de ce moteur électrique, l'énergie électrique non consommée devenant disponible pour d'autres besoins.

Avantageusement, le débit d'air prélevé au compresseur est suffisant pour le fonctionnement de la pompe par la turbine à air seule, en cas d'absence d'alimentation électrique ou de défaillance du moteur électrique, et pour continuer le vol.

Le rotor du moteur électrique est monté sur une paroi de l'ensemble tournant et le stator est monté sur une paroi du carter.

De préférence, l'ensemble tournant comporte un arbre mécaniquement couplé à l'accessoire et supporté par des paliers interposés entre l'arbre et le carter.

Selon un premier mode de réalisation, la turbine à air est du type axialo-centripète et l'ensemble tournant comporte à l'extrémité libre de l'arbre une roue à la périphérie de laquelle s'étendent des aubes axialo-centripètes.

Selon une première variante du premier mode de réalisation, le passage de la veine d'air à travers les aubes est délimité extérieurement par une paroi solidaire de l'extrémité des aubes et prolongée axialement dans le sens de la circulation du débit d'air par un manchon cylindrique autour duquel est monté le rotor du moteur électrique.

Selon une deuxième variante du premier mode de réalisation, la roue présente à l'extrémité radialement externe des aubes un manchon cylindrique puis s'étend axialement dans le sens opposé à la circulation du débit d'air et qui est disposé dans un logement axial ménagé dans le carter autour des paliers et le rotor du moteur électrique est monté à l'intérieur dudit manchon.

Selon un deuxième mode de réalisation de l'invention, la turbine à air est de type axial et comporte au moins une couronne d'aubes fixes qui s'étend radialement vers l'intérieur à partir du carter et une couronne d'aubes mobiles qui s'étend radialement vers l'extérieur à partir d'un tambour solidaire de l'arbre, le rotor du moteur électrique étant monté à l'intérieur dudit tambour et le stator étant monté autour d'un manchon cylindrique relié au carter par des bras structuraux.

Selon un troisième mode de réalisation de l'invention, la turbine à air est de type axial et comporte une couronne d'aubes distributrices et une couronne d'aubes mobiles prévues à la périphérie d'une roue qui s'étend radialement à partir d'une zone médiane de l'arbre, ce dernier étant supporté à chacune de ses extrémités par un palier, la veine de flux d'air étant délimitée, en aval de la couronne d'aubes mobiles, par deux vrioles formant une structure de support de l'un des paliers, et le rotor du moteur électrique est monté sur une face de ladite roue, l'entrefer dudit moteur électrique étant disposé dans un plan radial.

Selon une disposition avantageuse du troisième mode de réalisation de l'invention, il est prévu un deuxième moteur électrique dont le rotor est monté sur l'autre face de la roue.

D'autres avantages et caractéristiques de l'invention ressortiront à la lecture de la description suivante faite à titre d'exemple et en référence aux dessins annexés dans lesquels :
La figure 1 est une vue latérale d'un turbomoteur classique qui comporte un boîtier d'accessoires entraînés par un arbre de liaison ;
La figure 2 est une vue latérale d'un autre turbomoteur classique ayant un boîtier d'accessoires entraînés par un arbre de liaison ;
La figure 3 est une vue frontale du turbomoteur de la figure 2 ;
La figure 4a montre un schéma de principe d'un turbomoteur de type "tout électrique" comportant un système d'entraînement de la pompe à carburant conforme à l'invention ;
La figure 4b, semblable à la figure 4a, montre une variante de réalisation du système d'entraînement selon l"invention ;
La figure 5 montre un premier mode de réalisation du système d'entraînement selon l'invention ;
La figure 6 montre une variante du premier mode de réalisation de l'invention ;
La figure 7 montre un deuxième mode de réalisation du système d'entraînement selon l'invention ;
La figure 8 montre un troisième mode de réalisation du système d'entraînement selon l'invention, et
La figure 9 est semblable à la figure 6, et montre un réducteur disposé entre l'arbre d'entraînement du système d'entraînement et l'arbre de la pompe à carburant.

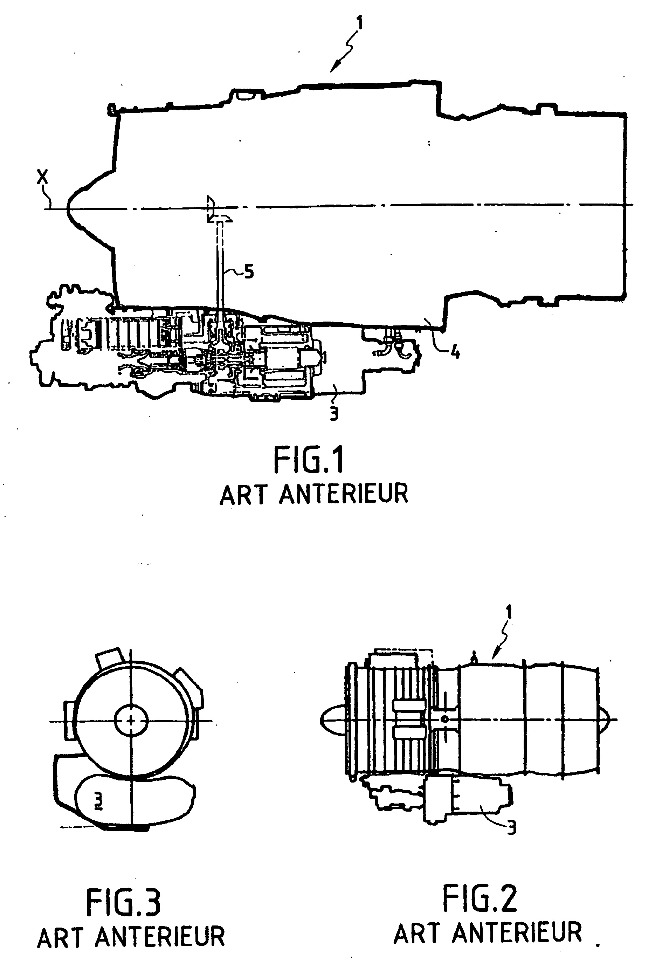

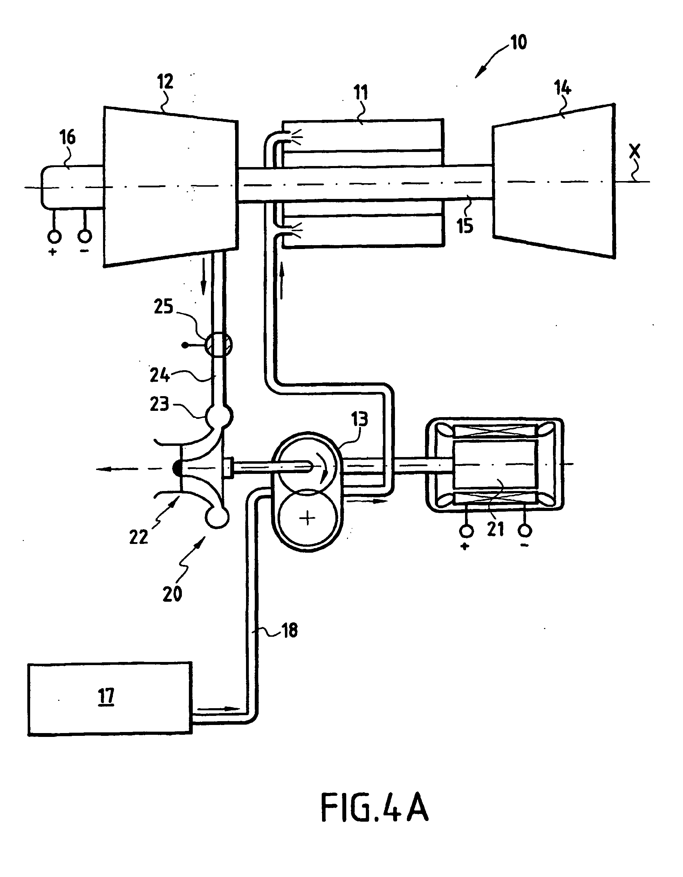

Les figures 1 à 3 montrent un turbomoteur 1 d'axe X qui comporte un boîtier d'accessoires 3 disposé sous le carter 4 du turbomoteur 1. Les accessoires disposés dans le boîtier 3 sont entraînés par un arbre de liaison 5 radial et des renvois d'angle. L'arbre de liaison 5 est entraîné par l'arbre d'axe X qui relie la turbine du turbomoteur 1 au compresseur. Les accessoires renfermés dans le boîtier 3 comportent essentiellement un générateur de courant, une pompe à carburant, une pompe de lubrification, des pompes hydrauliques, et un démarreur électrique ou à air, et sont tous entraînés mécaniquement par des chaînes cinématiques. Ainsi que cela est montré sur les figures 2 et 3, le boîtier 3 a un volume important et augmente considérablement la surface frontale du turbomoteur 1 surtout lorsqu'il s'agit d'un turboréacteur monocorps de faible puissance. La masse du boîtier et des accessoires peut atteindre 20% de la masse totale du turbomoteur 1 dans les turbomoteurs de petite puissance.

Pour diminuer la masse et la surface frontale d'un tel turboréacteur, il est judicieux d'entraîner les accessoires par des moteurs électriques alimentés en courant par un générateur-démarreur intégré dans le turbomoteur 1, c'est-à-dire par un générateur-démarreur d'axe X dont le rotor est solidaire du rotor du turbomoteur 1. Les accessoires peuvent alors être placés n'importe où dans la cellule ou le pylône de suspension du turbomoteur 1, et l'utilisation d'un moteur électrique présente l'avantage de faciliter le pilotage de l'accessoire. Le boîtier 3 et l'arbre de liaison 5 peuvent alors être éliminés.

L'inconvénient majeur de l'entraînement d'un accessoire par un moteur électrique est, qu'en cas de défaillance dudit moteur électrique ou en cas de défaillance dans l'alimentation électrique de ce moteur, l'accessoire n'est plus entraîné.

Si l'accessoire est la pompe à carburant, la chambre de combustion n'est plus alimentée en carburant, ce qui provoque l'extinction de la chambre de combustion.

Le but de l'invention est de proposer un système d'entraînement d'un accessoire, et notamment de la pompe à carburant, qui permette le fonctionnement de l'accessoire en cas de défaillance du moteur électrique ou de son alimentation en électricité.

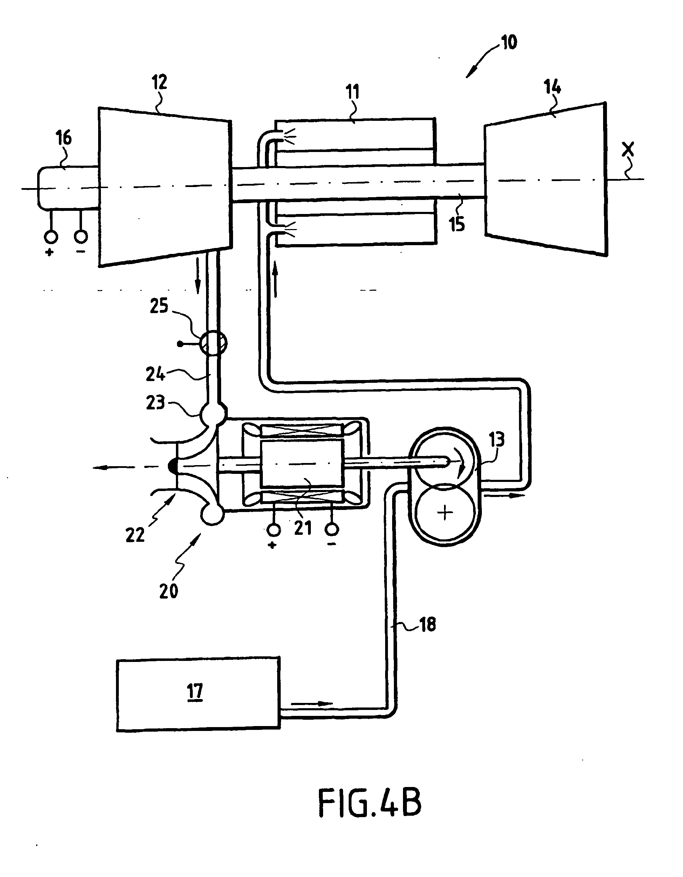

Les figures 4a et 4b montrent schématiquement un turbomoteur 10 "tout électrique" d'axe X qui comporte une chambre de combustion 11 alimentée en air par un compresseur 12 et en carburant par une pompe à carburant 13. Les gaz chauds issus de la chambre de combustion 11 entraînent une turbine 14 reliée au compresseur 12 par un arbre 15. Le turbomoteur 10 est en outre équipé d'un démarreur-générateur intégré 16 d'axe X disposé au niveau des zones froides du compresseur 12. La référence 17 désigne le réservoir de carburant relié à la pompe 13 par un conduit 18.

La pompe à carburant 13 est entraînée par un système d'entraînement 20 qui comporte d'une part un moteur électrique 21 et une turbine à air 22 de préférence coaxiale au moteur électrique 21 et dont la tubulure d'entrée 23 est reliée au compresseur 12 par un conduit de prélèvement d'air 24 dans lequel est interposée une vanne de réglage 25 à deux voies, pilotée par le Fadec du turbomoteur 10 non représenté sur le dessin.

Le système d'entraînement 20 fonctionne de la manière décrite ci-après :
Lors de la phase du démarrage du turbomoteur 10, la vanne de réglage 25 est dans la position fermée. Le démarreur-générateur 16 est dans la configuration démarreur et alimenté en courant par un groupe auxiliaire de puissance, non montré sur le dessin. Le moteur électrique 21 est également alimenté en courant par le groupe auxiliaire de puissance au cours de la phase de démarrage. Le rotor du turbomoteur 10 se met à tourner au régime d'allumage et la chambre de combustion 11 est alimentée en air par le compresseur 12. Le carburant est alors injecté dans la chambre de combustion 11 au moyen de la pompe à carburant 13 entraînée par le moteur électrique 21 sous le contrôle du Fadec. Dès l'allumage effectué, le démarreur-générateur 16 est mis dans la configuration générateur de courant. Dès que le régime de ralenti est atteint, le générateur 16 fournit assez d'énergie électrique pour alimenter le moteur électrique 21 d'entraînement de la pompe à carburant 13 et les moteurs électriques d'entraînement des autres accessoires, de façon à maintenir le turbomoteur 10 en régime autonome, sans l'aide du groupe auxiliaire de puissance.
La vanne de réglage 25 du débit d'air prélevé au compresseur 12, pilotée par le Fadec, est alors ouverte pour que la turbine à air 22 fournisse un appoint d'entraînement mécanique à la pompe à carburant 13 dans tous les domaines de vol.
La turbine à air 22 est dimensionnée de telle manière qu'en cas de panne électrique du générateur 16 ou du moteur électrique 21, elle soit capable de fournir en secours, seule, suffisamment de puissance pour entraîner la pompe à carburant 13, afin de permettre à l'avion ou à l'engin volant équipé du turbomoteur 10 de continuer son vol ou de rentrer à sa base, même à basse vitesse.

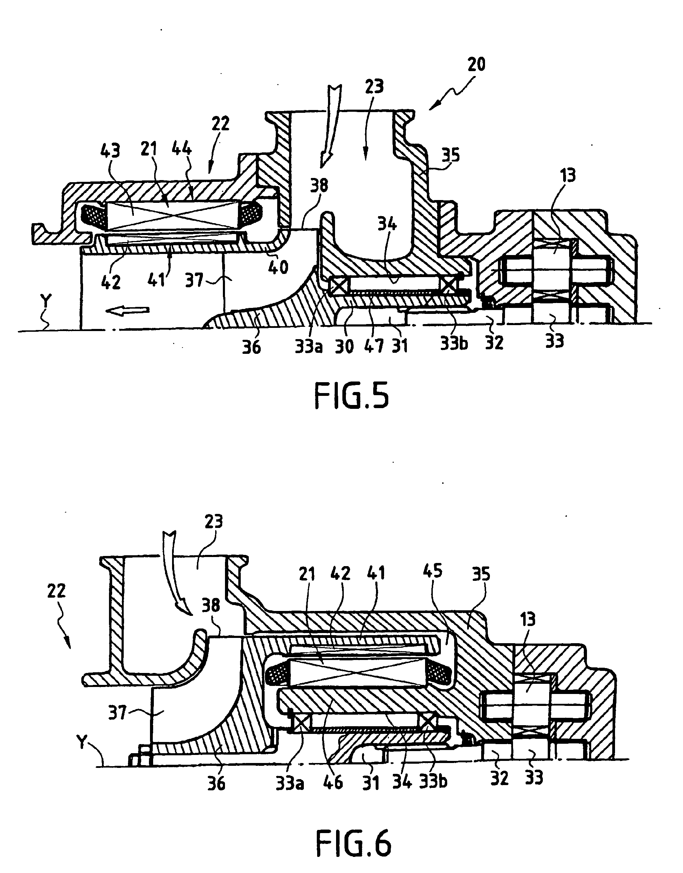

Les figure 5 à 9 montrent des exemples de réalisation d'un dispositif d'entraînement 20 électropneumatique d'une pompe à engrenages 13.

Selon un premier mode de réalisation montré sur les figures 5 et 6, la turbine à air 22 est de type axialo-centripète et comporte un arbre 30 d'axe Y comportant à l'une de ses extrémités un alésage cannelé 31 permettant son accouplement avec l'arbre d'entraînement 32 de l'une des roues dentées 33 de la pompe à engrenages 13. L'arbre 30 est supporté à l'aide de deux paliers 33a et 33b dans un alésage 34 du carter 35 de la turbine à air 22. L'arbre 30, présente à son extrémité opposée à la pompe à engrenages 13, une roue 36 à profil aérodynamique à la périphérie de laquelle s'étendent radialement vers l'extérieur des aubes 37 profilées axialo-centripètes dont les bords d'attaque 38 radialement externes séparent le débit d'air issu de la turbulure d'entrée 23 en filets d'air s'écoulant entre les aubes 37 et s'évacuant parallèlement à l'axe Y à la sortie des aubes 37.

Selon une première variante du premier mode de réalisation de l'invention, montrée sur la figure 5, les passages des filets d'air à travers les aubes 37 sont délimités du côté extérieur par une paroi 40 solidaire des aubes 37, ayant un profilé aérodynamique. Cette paroi 40 est prolongé dans le sens de la circulation du débit d'air par un manchon cylindrique 41 d'axe Y autour duquel est monté le rotor 42 du moteur électrique 21, le stator 43 de ce moteur électrique étant monté dans un alésage 44 ménagé dans le carter 35 en regard du manchon cylindrique 41. Le moteur électrique 21 ne comporte aucun palier spécifique. Dans cette variante de réalisation, l'arbre 31 et la roue 36 sont monoblocs.

Selon une deuxième variante du premier mode de réalisation de l'invention, montrée sur la figure 6, l'extrémité de l'arbre 31 éloignée de la pompe à engrenages 13 est emmanchée dans un alésage de la roue aubagée 36. Cette roue 36 présente à son extrémité radialement externe un manchon cylindrique 41 d'axe Y qui s'étend axialement dans la direction opposée à la circulation du débit d'air à la sortie des aubes 37, dans le prolongement des bords d'attaque 38 des aubes 37. Le manchon cylindrique 41 est disposé dans un logement cylindrique 45 ménagé dans le carter 35 autour du support 46 des paliers 33a et 33b et ouvert axialement du côté de la roue 36.

Le rotor 42 du moteur électrique 21 est monté à l'intérieur du manchon cylindrique 41 et entoure le stator 42 du moteur électrique qui lui est monté dans le logement cylindrique 45 autour du support 46 des paliers 33a et 33b.

Dans les figures 5 et 6 la référence 47 désigne une entretoise disposée entre les paliers 33a et 33b. Ces paliers 33a et 33b sont retenus sur l'arbre 30 de manière traditionnelle par des épaulements et des bagues élastiques coopérant avec des gorges.

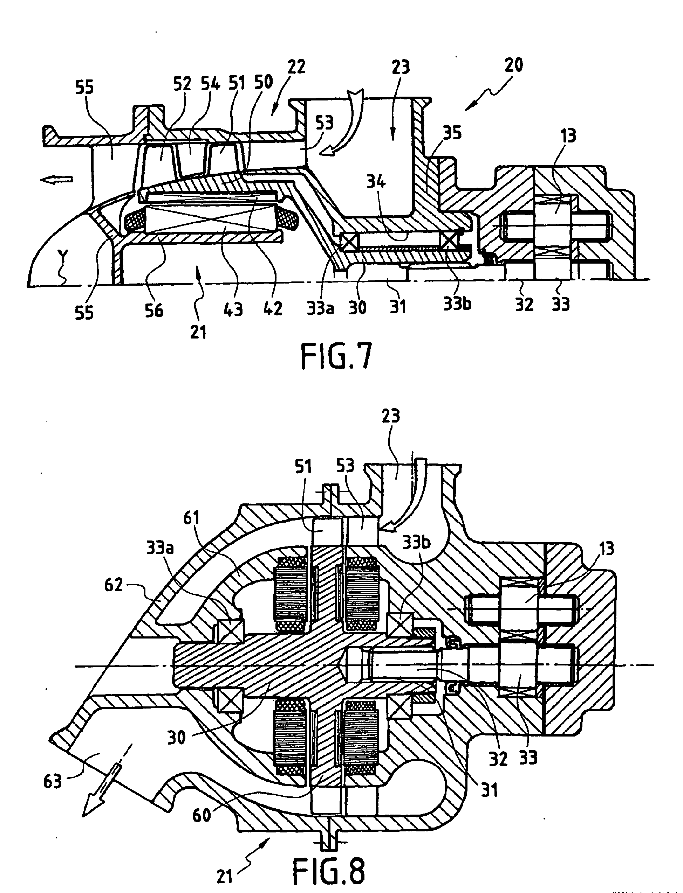

La figure 7 montre un deuxième mode de réalisation du système d'entraînement 20 d'une pompe à engrenages 13. La turbine à air 22 est ici de type axial et comporte un tambour 50 prévu à l'extrémité libre, d'un arbre 30 supporté par deux paliers 33a, 33b dans l'alésage 34 du carter 35 de la turbine à air 22. L'arbre 30 comporte également un alésage 31 pour son accouplement avec l'arbre d'entraînement 32 d'une roue dentée 33 de la pompe à engrenages 13. Le tambour 50 présente à sa périphérie deux couronnes d'aubes mobiles 51, 52, qui s'étendent radialement vers l'extérieur. La portion du carter 35 qui entoure le tambour 50 présente une première couronne d'aubes fixes 53 ou directrices entre la tubulure d'entrée 23 et la couronne d'aubes mobiles 51, une deuxième couronne d'aubes fixes 54, qui s'étendent radialement vers l'intérieur entre la couronne d'aubes mobiles 51 et la couronne d'aubes mobiles 52, et une pluralité de bras structuraux 55 qui s'étendent radialement vers l'intérieur en aval de la deuxième couronne d'aubes mobiles 52 et qui relient le carter extérieur 35 à une structure interne 55, à partir de laquelle s'étend axialement à l'intérieur du tambour 50, un manchon cylindrique 56. La stator 43 du moteur électrique 21 est monté autour du manchon cylindrique 56, et le rotor 42 est monté dans l'alésage intérieur du tambour 50.

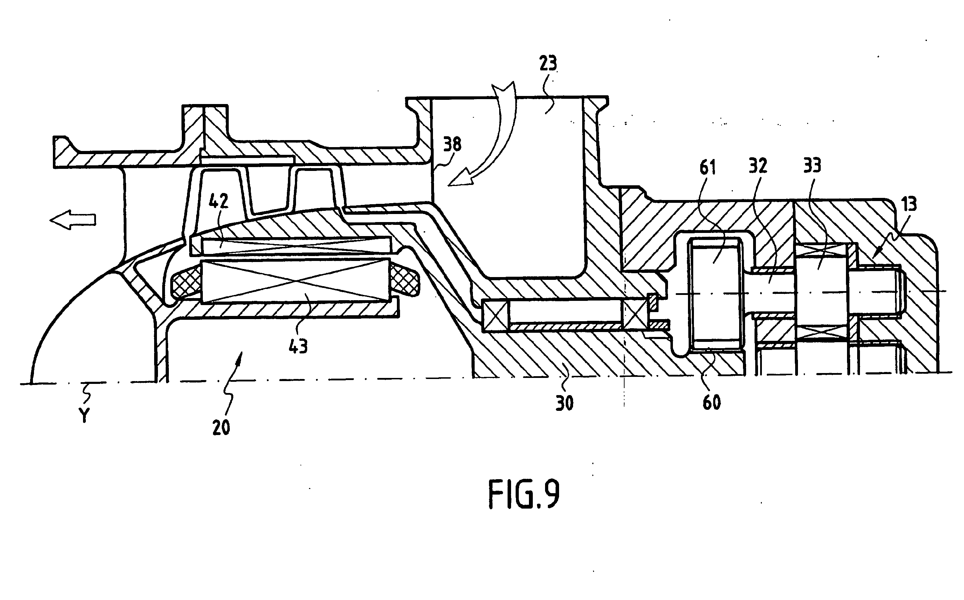

La figure 9 montre un système d'entraînement 20 conforme à celui décrit ci-dessus. La seule différence est le fait que l'arbre 30 de la turbine à air est plein et présente à sa périphérie une denture 60 qui engrène avec un pignon 61 solidaire de l'arbre d'entraînement 32 de l'un des engrenages 33 de la pompe à engrenages 13. La denture 60 et le pignon 61 jouent le rôle d'un réducteur de vitesse.

La figure 8 montre un troisième mode de réalisation de l'invention. La turbine à air 21 est de type axial mono-étage, et comporte une couronne d'aubes fixes directrices 53 en aval de la tubulure 23 dans le sens de la circulation de l'air dans la turbine à air 21. Une couronne d'aubes mobiles 51 est disposée en aval de la couronne d'aubes directrices 53. Les aubes mobiles 51 s'étendent radialement vers l'extérieur à partir de la périphérie d'une roue 60 pleine qui s'étend radialement vers l'extérieur à partir de la zone médiane d'un arbre 30 supporté à chacune de ses extrémités par un palier 33a, 33b. L'extrémité de l'arbre 30 située du côté de la tubulure 23 comporte un alésage cannelé 31 pour l'accouplement de l'arbre d'entraînement 32 de l'engrenage 33 de la pompe à engrenages 13.

La veine du flux d'air est délimitée en aval de la couronne d'aubes mobiles 51 par deux viroles 61, 62 formant une structure de support du palier 33a. Une bouche d'échappement d'air 63 est ménagée dans la virole externe 62.

Les faces radiales de la roue 60 comportent chacune un logement annulaire dans lequel est monté un rotor 42 de moteur électrique à entrefer radial, le stator 43 de ce moteur étant monté dans un alésage du carter 35 ou de la virole 61.

Le système d'entraînement 20 selon ce troisième mode de réalisation comporte ainsi deux moteurs électriques disposés de part et d'autre du plan radial médian de la roue 60.

Dans les trois modes de réalisation décrits ci-dessus, le moteur électrique 21 est intégré à l'intérieur de la turbine à air 22 et ne comporte pas de paliers spécifiques entre le rotor 42 et le stator 43, les paliers 33a et 33b jouant le rôle de centrage de l'élément tournant de la turbine à air 22 par rapport au carter 35 et, par le fait même, le rôle de centrage du rotor 42 par rapport au stator 43. Le système d'entraînement 20 de la pompe à engrenages 13 est ainsi compact, fiable et léger.

Le moteur électrique d'entraînement est de type connu, sans balai, asynchrone, à aimants permanents ou à réluctance variable par exemple.

Il est à noter que la pompe à engrenages 13 peut être associée au système d'entraînement 20 pour constituer un module complet, prêt à monter et facile à remplacer.

## Revendications

1. Système d'entraînement d'une pompe à carburant (13) ou d'une pompe de lubrification, dans un turbomoteur (10), ledit système comportant un moteur électrique (21) présentant un stator (43) et un rotor (42), **caractérisé par le fait qu'**il comporte en outre une turbine à air (20) présentant un carter (35) et un ensemble tournant (30, 36, 50) et en ce que ledit rotor et ledit ensemble tournant sont mécaniquement couplés à ladite pompe (13), ladite turbine à air étant susceptible d'être alimentée par un débit d'air prélevé dans un compresseur (12) dudit turbomoteur (10) afin de permettre une participation à l'entraînement de ladite pompe.

2. Système selon la revendication 1, **caractérisé par le fait qu'**il comporte en outre une vanne de réglage (25) du débit d'air prélevé au compresseur (12) qui est en position fermée pendant la phase de démarrage du turbomoteur (10) et en position ouverte après le démarrage.

3. Système selon l'une des revendications 1 ou 2, **caractérisé par le fait que** le débit d'air prélevé au compresseur (12) est suffisant pour permettre le fonctionnement de la pompe (13) par la turbine à air (22), en cas d'absence d'alimentation électrique ou de défaillance dudit moteur électrique (21).

4. Système selon l'une quelconque des revendications 1 à 3, **caractérisé par le fait que** la turbine à air (20) est coaxiale audit moteur électrique.

5. Système selon la revendication 4, **caractérisé par le fait que** le stator (43) dudit moteur électrique est intégré dans le carter (35) de ladite turbine à air et le rotor (42) dudit moteur électrique est intégré dans l'ensemble tournant.

6. Système selon la revendication 5, **caractérisé par le fait que** le rotor (42) du moteur électrique (21) est monté sur une paroi (41) de l'ensemble tournant et le stator (43) est monté sur une paroi du carter (35).

7. Système selon la revendication 6, **caractérisé par le fait que** l'ensemble tournant comporte un arbre (30) mécaniquement couplé à la pompe (13) et supporté par des paliers (33a, 33b) interposés entre ledit arbre (30) et le carter (35).

8. Système selon la revendication 7, **caractérisé par le fait que** la turbine à air (22) est du type axialo-centripète et l'ensemble tournant comporte à l'extrémité libre de l'arbre (30) une roue (36) à la périphérie de laquelle s'étendent des aubes axialo-centripètes (37).

9. Système selon la revendication 8, **caractérisé par le fait que** les passages de la veine d'air à travers les aubes (37) sont délimités extérieurement par une paroi (40) solidaire de l'extrémité des aubes (37) et prolongée axialement dans le sens de la circulation du débit d'air par un manchon cylindrique (41) autour duquel est monté le rotor (42) du moteur électrique (21).

10. Système selon la revendication 8, **caractérisé par le fait que** la roue (36) présente à l'extrémité radialement externe des aubes (37) un manchon cylindrique (41) qui s'étend axialement dans le sens opposé à la circulation du débit d'air, et qui est disposé dans un logement axial (45) ménagé dans le carter (35) autour des paliers (33a, 33b) et le rotor (42) du moteur électrique (21) est monté à l'intérieur dudit manchon (41).

11. Système selon la revendication 7, **caractérisé par le fait que** la turbine à air (22) est de type axial et comporte au moins une couronne d'aubes fixes (53, 54) qui s'étendent radialement vers l'intérieur à partir du carter (35) et une couronne d'aubes mobiles (51, 52) qui s'étendent radialement vers l'extérieur à partir d'un tambour (50) solidaire de l'arbre (30), le rotor (42) du moteur électrique (21) étant monté à l'intérieur dudit tambour (50) et le stator (43) étant monté autour d'un manchon cylindrique (56) relié au carter (35) par des bras structuraux (55).

12. Système selon la revendication 7, **caractérisé par le fait que** la turbine à air (22) est de type axial et comporte une couronne d'aubes distributrices et une couronne d'aubes mobiles (51) prévues à la périphérie d'une roue (60) qui s'étend radialement à partir d'une zone médiane de l'arbre (30), ce dernier étant supporté à chacune de ses extrémités par un palier (33a, 33b), la veine du flux d'air étant délimitée en aval de la couronne d'aubes mobiles (51), par deux viroles (61, 62) formant une structure de support de l'un des paliers (33a), et le rotor (42) du moteur électrique (21) est monté sur une face de ladite roue (60), l'entrefer dudit moteur électrique étant disposé dans un plan radial.

13. Système selon la revendication 12, **caractérisé par le fait qu'**il comporte un deuxième moteur électrique dont le rotor (42) est monté sur l'autre face de la roue (60).

14. Système selon l'une quelconque des revendications 1 à 13, **caractérisé par le fait que** la pompe (13) est une pompe à engrenages et constitue avec ledit système un module complet, prêt à monter et facile à remplacer.

## Patentansprüche

1. System für den Antrieb einer Kraftstoffpumpe (13) oder einer Schmierpumpe in einem Turbomotor (10), wobei das genannte System einen Elektromotor (21) umfaßt, der einen Stator (43) und einen Rotor (42) aufweist, **dadurch gekennzeichnet, daß** es ferner eine Luftturbine (20) umfaßt, die ein Gehäuse (35) und einen drehbaren Aufbau (30, 36, 50) aufweist, und daß der Rotor und der drehbare Aufbau mit der genannten Pumpe (13) mechanisch gekoppelt sind, wobei die Luftturbine geeignet ist, mit einer aus einem Verdichter (12) des Turbomotors (10) entnommenen Luftmenge beaufschlagt zu werden, um eine Beteiligung am Antrieb der Pumpe zu ermöglichen.

2. System nach Anspruch 1, **dadurch gekennzeichnet, daß** es weiterhin ein Ventil (25) zur Regelung der dem Verdichter (12) entnommenen Luftmenge umfaßt, das sich während der Startphase des Turbomotors (10) in der geschlossenen Stellung und nach dem Starten in der geöffneten Stellung befindet.

3. System nach einem der Ansprüche 1 oder 2, **dadurch gekennzeichnet, daß** die dem Verdichter (12) entnommene Luftmenge ausreicht, um bei Ausbleiben der elektrischen Versorgung oder bei einem Ausfall des Elektromotors (21) den Betrieb der Pumpe (13) über die Luftturbine (22) zu ermöglichen.

4. System nach irgendeinem der Ansprüche 1 bis 3, **dadurch gekennzeichnet, daß** die Luftturbine (20) zu dem Elektromotor koaxial ist.

5. System nach Anspruch 4, **dadurch gekennzeichnet, daß** der Stator (43) des Elektromotors in das Gehäuse (35) der Luftturbine integriert ist und der Rotor (42) des Elektromotors in den drehbaren Aufbau integriert ist.

6. System nach Anspruch 5, **dadurch gekennzeichnet, daß** der Rotor (42) des Elektromotors (21) an einer Wand (41) des drehbaren Aufbaus angebracht ist und der Stator (43) an einer Wand des Gehäuses (35) angebracht ist.

7. System nach Anspruch 6, **dadurch gekennzeichnet, daß** der drehbare Aufbau eine Welle (30) umfaßt, die mit der Pumpe (13) mechanisch gekoppelt und von Lagern (33a, 33b) getragen ist, die zwischen der Welle (30) und dem Gehäuse (35) angeordnet sind.

8. System nach Anspruch 7, **dadurch gekennzeichnet, daß** die Luftturbine (22) vom Typ axial-zentripetal ist und der drehbare Aufbau am freien Ende der Welle (30) ein Rad (36) aufweist, an dessen Umfang sich axial-zentripetale Schaufeln (37) erstrecken.

9. System nach Anspruch 8, **dadurch gekennzeichnet, daß** die Durchgänge der Luftader durch die Schaufeln (37) außen durch eine Wand (40) begrenzt sind, die mit dem Ende der Schaufeln (37) fest verbunden ist und die in der Zirkulationsrichtung der Luftmenge durch eine zylinderförmige Hülse (41) axial verlängert ist, um die herum der Rotor (42) des Elektromotors (21) angeordnet ist.

10. System nach Anspruch 8, **dadurch gekennzeichnet, daß** das Rad (36) am radial äußeren Ende der Schaufeln (37) eine zylinderförmige Hülse (41) aufweist, die sich axial in der zu der Zirkulation der Luftmenge entgegengesetzten Richtung erstreckt und die in einer in dem Gehäuse (35) um die Lager (33a, 33b) herum ausgebildeten axialen Aufnahme (45) angeordnet ist, und der Rotor (42) des Elektromotors (21) in der genannten Hülse (41) angeordnet ist.

11. System nach Anspruch 7, **dadurch gekennzeichnet, daß** die Luftturbine (22) vom axialen Typ ist und wenigstens einen Kranz mit festen Schaufeln (53, 54), die sich ausgehend von dem Gehäuse (35) radial nach innen erstrecken, sowie einen Kranz mit beweglichen Schaufeln (51, 52), die sich ausgehend von einer mit der Welle (30) fest verbundenen Trommel (50) radial nach außen erstrecken, umfaßt, wobei der Rotor (42) des Elektromotors (21) in der Trommel (50) und der Stator (43) um eine zylindrische Hülle (56) angeordnet ist, die über Strukturarme (55) mit dem Gehäuse (35) verbunden ist.

12. System nach Anspruch 7, **dadurch gekennzeichnet, daß** die Luftturbine (22) axialen Typs ist und einen Kranz mit Verteilerschaufeln sowie einen Kranz mit beweglichen Schaufeln (51) umfaßt, die am Umfang eines Rades (60) vorgesehen sind, das sich ausgehend von einem Mittelbereich der Welle (30) radial erstreckt, wobei letztere an einem jeden ihrer Enden von einem Lager (33a, 33b) getragen ist, wobei die Ader des Luftstroms stromabwärts des Kranzes mit beweglichen Schaufeln (51) durch zwei Ringe (61, 62) begrenzt ist, die eine Stützstruktur von einem der Lager (33a) bilden, und der Rotor (42) des Elektromotors (21) an einer Seite des Rades (60) angebracht ist, wobei der Luftspalt des Elektromotors in einer Radialebene angeordnet ist.

13. System nach Anspruch 12, **dadurch gekennzeichnet, daß** es einen zweiten Elektromotor aufweist, dessen Rotor (42) an der anderen Seite des Rades (60) angebracht ist.

14. System nach irgendeinem der Ansprüche 1 bis 13, **dadurch gekennzeichnet, daß** die Pumpe (13) eine Getriebepumpe ist und mit dem genannten System ein vollständiges Modul bildet, das montagebereit ist und leicht ausgewechselt werden kann.

## Claims

1. A system for driving a fuel pump (13) or an oil pump in a turboengine (10), said system comprising an electric motor (21) presenting a stator (43) and a rotor (42), the system being **characterised by** the fact that it further comprises an air turbine (20) presenting a casing (35) and a rotary assembly (30, 36, 50) and in that said rotor and said rotary assembly are mechanically coupled to said pump (13), said air turbine being suitable for being fed by a flow of air taken from a compressor (12) of said turboengine (10) in order to contribute to driving said pump.

2. A system according to claim 1, **characterised by** the fact that it further comprises a control valve (25) for controlling the flow of air taken from the compressor (12), which control valve is in a closed position while the turboengine (10) is starting and in an open position once it has started.

3. A system according to claim 1 or claim 2, **characterised by** the fact that the flow of air taken from the compressor (12) is sufficient to enable the pump (13) to be operated by the air turbine (22) in the absence of electrical power supply or in the event of said electric motor (21) failing.

4. A system according to any one of claims 1 to 3, **characterised by** the fact that the air turbine (20) lies on the same axis as said electric motor.

5. A system according to claim 4, **characterised by** the fact that the stator (43) of said electric motor is integrated in the casing (35) of said air turbine, and the rotor (42) of said electric motor is integrated in the rotary assembly.

6. A system according to claim 5, **characterised by** the fact that the rotor (42) of the electric motor (21) is mounted on a wall (41) of the rotary assembly, and the stator (43) is mounted on a wall of the casing (35).

7. A system according to claim 6, **characterised by** the fact that the rotary assembly includes a shaft (30) mechanically coupled to the pump (13) and supported by bearings (33a, 33b) interposed between said shaft (30) and the casing (35).

8. A system according to claim 7, **characterised by** the fact that the air turbine (22) is of the axial-centripetal type, and the rotary assembly includes a wheel (36) at the free end of the shaft (30), axial-centripetal blades (37) extending from the periphery of the wheel (36).

9. A system according to claim 8, **characterised by** the fact that the air stream passages between the blades (37) are outwardly defined by a wall (40) secured to the ends of the blades (37) and axially extended in the air flow direction by a cylindrical sleeve (41) around which the rotor (42) of the electric motor (21) is mounted.

10. A system according to claim 8, **characterised by** the fact that the wheel (36) presents a cylindrical sleeve (41) at the radially outer ends of the blades (37), which sleeve extends axially in the direction opposite the air flow direction, and is disposed in an axial housing (45) formed in the casing (35) around the bearings (33a, 33b), and the rotor (42) of the electric motor (21) is mounted inside said sleeve (41).

11. A system according to claim 7, **characterised by** the fact that the air turbine (22) is of the axial type and comprises at least one ring of stationary blades (53, 54) extending radially inwards from the casing (35), and a ring of moving blades (51, 52) extending radially outwards from a drum (50) secured to the shaft (30), the rotor (42) of the electric motor (21) being mounted inside said drum (50) and the stator (43) being mounted around a cylindrical sleeve (56) connected to the casing (35) by structural arms (55).

12. A system according to claim 7, **characterised by** the fact that the air turbine (22) is of the axial type and has a ring of nozzle blades and a ring of moving blades (51) provided at the periphery of a wheel (60) which extends radially from a middle zone of the shaft (30), said shaft being supported at each of its ends by a respective bearing (33a, 33b), the air flow stream being defined downstream from the ring of moving blades (51) by two shrouds (61, 62) forming a support structure for one of the bearings (33a), and the rotor (42) of the electric motor (21) is mounted on a face of said wheel (60), the airgap of said electric motor lying in a radial plane.

13. A system according to claim 12, **characterised by** the fact that it has a second electric motor whose rotor (42) is mounted on the other face of the wheel (60).

14. A system according to any one of claims 1 to 13, **characterised by** the fact that the pump (13) is a gear pump and together with said system constitutes a complete module that is ready for mounting and easy to replace.
